# EUROPEAN PATENT SPECIFICATION

(11) **EP 2 754 747 B1**
(45) Date of publication and mention of the grant of the patent: **02.08.2017**
(21) Application number: 12830670.1
(22) Date of filing: 31.08.2012
(51) Int. Cl.: D06M 11/36, C04B 41/85, D04H 1/4209, D04H 1/46, C04B 35/443, C04B 35/80, D06M 11/44, D06M 11/45, F16L 59/02, D04H 1/587

(54) **MOLDED INORGANIC-FIBER OBJECT**
GEFORMTER GEGENSTAND AUS ANORGANISCHEN FASERN
OBJET MOULÉ À BASE DE FIBRES INORGANIQUES

(30) Priority: 08.09.2011 JP 2011195550
(43) Date of publication of application: 16.07.2014
(73) Proprietor: Mitsubishi Chemical Corporation, Tokyo 100-8251 (JP)
(72) Inventor: HATA, Yusaku, Joetsu-shi Niigata 942-0032 (JP); FUKUI, Tsuyoshi, Joetsu-shi Niigata 942-0032 (JP); ITO, Toshio, Joetsu-shi Niigata 942-0032 (JP); SUZUKI, Mitsuo, Tokyo 100-8251 (JP); ITO, Hidetaka, Joetsu-shi Niigata 942-0032 (JP)
(74) Representative: Hoffmann Eitle
(86) International application number: PCT/JP2012/072227
(87) International publication number: WO 2013/035646

(56) References cited:
- WO-A1-2013/035645
- DE-A1-102006 036 624
- JP-A- H05 254 926
- JP-A- H10 139 561
- JP-A- 2011 032 118
- JP-A- 2011 032 119
- JP-A- 2011 208 344
- JP-A- 2011 208 344

## Description

### TECHNICAL FIELD

The present invention relates to an inorganic fiber molded body, and more particularly, to an inorganic fiber molded body having an extremely light weight and a good cushioning property which is excellent not only in thermal shock resistance and mechanical shock resistance but also in scale resistance, and exhibits a less shrinkage factor under high-temperature heating conditions.

### BACKGROUND ART

There are conventionally known inorganic fiber molded bodies produced by subjecting a slurry comprising inorganic fibers such as alumina fibers, silica fibers and mullite (aluminosilicate) fibers, inorganic particles, an inorganic binder, an organic binder and the like to dehydration molding process and then firing the resulting dehydration-molded product. The inorganic fiber molded bodies have been used as a refractory insulating material for high-temperature industrial furnaces because they have a relatively light weight, an easy-processing ability, and an excellent heat insulating property.

In recent years, in order to improve an ability of controlling an inside temperature of high-temperature firing furnaces and achieving saving of energy, inorganic fiber molded bodies obtained from an aggregate of inorganic fibers produced by forming the inorganic fibers into a laminated nonwoven fabric shape, in particular, an aggregate of inorganic fibers subjected to needling treatment (needle blanket), have been frequently used as a high-temperature insulting material (blanket block) fixed to furnace walls or skid posts formed of stainless steel or the like by utilizing excellent properties thereof such as an extremely light weight, an easy-processing ability and a high thermal shock resistance (for example, refer to Patent Document 1).

On the other hand, in furnaces, skid pipes, etc., to which the above inorganic fiber molded body is fitted as a heat-insulating material, when a steel material as a constituting material of the furnaces is heated, scales formed of iron oxide, etc., are produced. In this case, the inorganic fiber molded body used as the insulating material tends to suffer from the problem of erosion by the scales.

More specifically, low-melting point compounds produced by the reaction between the scales and the inorganic fibers tend to promote shrinkage and sintering of the inorganic fibers, so that the heat-insulating material tends to suffer from the problems such as reduction in thickness thereof and deterioration in heat-insulating property owing to opening of joins between heat-insulating blocks.

To solve the problem of erosion of the heat-insulating material by the scales, for example, there has been proposed the method in which a coating agent comprising a spinel having an excellent scale resistance is applied onto a surface of an inorganic fiber molded body to form a coating layer thereon and protect the heat-insulating material (for example, refer to Patent Document 2).

However, in this method, it may be difficult to attain strong adhesion between the coating layer and the inorganic fiber molded body, and there also tends to arise such a problem that the coating layer is peeled off upon application of thermal shock or mechanical shock, etc., thereto, so that the inorganic fibers susceptible to erosion by the scales are exposed to outside. In addition, there also tends to occur such a problem that since the coating agent is sprayed on the inorganic fiber molded body using a spray gun after forming the molded body, the working operation becomes complicated.

In addition, there has also proposed the method in which an amorphous refractory material comprising a spinel phase is cast or sprayed as a refractory material for lining in furnaces (for example, refer to Patent Document 3). JP2011208344A discloses a needled blanket of inorganic fibers having a volume density of 0.08-0.20 g/cm³ that is impregnated with a sol that contains alumina, magnesia or spinel. The fibers are preferably alumina/silica with 72 wt % alumina and with an average diameter of 5.5 microns and a minimum diameter of 3 microns. The needle density is 2-50 punches per cm. The surface density of the said needle blanket is 1000-4000g/cm². The blanket is used as a burner tile.

WO2013/035645A1 discloses a needled blanket of inorganic fibers that is impregnated with a sol that contains alumina. The fibers are preferably alumina/silica with 72 wt% alumina and with an average diameter of 5.5 microns and a minimum diameter of 3 microns. The sol that is impregnated can also be a precursor of spinel. The density is 0.08-0.30 g/cm³. The needle density is 2-50 punches per cm². The surface density of the said needle blanket is 1000-4000g/cm². The blanket is used as a burner tile.

JPH10139561A discloses impregnating ceramic fiber blankets with an alumina sol. The ceramic fibers contain 70 wt% alumina and 30 wt% silica and are needled.

However, the amorphous refractory material obtained by these methods generally has a number of voids and therefore suffers from problems such as brittleness and occurrence of cracks or the like upon application of thermal shock or mechanical shock thereto. In addition, the above spraying or casting operation if conducted in situ tends to not only require complicated works, but also tends to suffer from problems such as remarkable deterioration in working environments, e.g., scattering of a large amount of fine powdery inorganic fibers in air.

### CITATION LIST

### PATENT LITERATURE

Patent Document 1: Japanese Patent Application Laid-Open (KOKAI) No. 2004-43918
Patent Document 2: Japanese Patent Application Laid-Open (KOKAI) No. 2011-32118
Patent Document 3: Japanese Patent Application Laid-Open (KOKAI) No. 2002-241182

### SUMMARY OF THE INVENTION

### Problems to be solved by the invention

An object of the present invention is to provide an inorganic fiber molded body that is excellent in scale resistance, thermal shock resistance and mechanical shock resistance, and prevented from suffering from shrinkage when used under high-temperature heating conditions.

As a result of the present inventors' earnest study for solving the above problems, the following fact has been found. That is, it has been found that an inorganic fiber molded body obtained by impregnating a liquid material of a precursor of a spinel-based compound into an aggregate of inorganic fibers, the precursor being represented by the general formula: MgₓAl_{y}O₄ wherein an atomic ratio (y/x) is from 6 to 10, drying the thus impregnated aggregate, and firing the dried aggregate to convert the precursor into an oxide thereof, wherein the needle blanket, obtained after the impregnating the precursor of the spinel-based compound thereon and then drying, but before the firing, has a bulk density of more than 0.20 g/cm³ and not more than 0.45 g/cm³, is prevented from suffering from shrinkage upon heating, and also excellent in scale resistance, thermal shock resistance and mechanical shock resistance.

### Means for solving problems

The present invention has been attained on the basis of the above finding.

### Effect of the invention

The inorganic fiber molded body according to the present invention is excellent in thermal shock resistance, mechanical shock resistance and scale resistance, can be prevented from suffering from shrinkage when used under high-temperature heating conditions, and therefore well-balanced in properties thereof. For this reason, the inorganic fiber molded body according to the present invention can be suitably used as a heat-insulating material for a burner tile in high-temperature furnaces or peripheral pipes thereof. Among them, these effects can be more remarkably exhibited when the inorganic fiber molded body is used in objectives such as, for example, skid pipes having a high curvature (relatively small diameter) which tend to cause large deformation upon fitting the molded body thereto.

### PREFERRED EMBODIMENTS FOR CARRYING OUT THE INVENTION

The present invention will be described in more detail below.

### [Bulk density and thickness]

The inorganic fiber molded body according to the present invention is produced by impregnating a needle blanket of inorganic fibers with a liquid material of a precursor of a spinel-based compound represented by the general formula:

MgₓAl_{y}O₄

wherein an atomic ratio (y/x) is from 6 to 10; drying the thus impregnated needle blanket; and firing the dried needle blanket to convert the precursor into an oxide thereof.

The needle blanket obtained after carrying the precursor of the spinel-based compound thereon and then drying but before firing, has a bulk density of more than 0.20 g/cm³ and not more than 0.45 g/cm³, preferably 0.25 to 0.35 g/cm³, and more preferably 0.25 to 0.30 g/cm³. When the bulk density of the needle blanket is excessively small, the shrinkage factor of the resulting inorganic fiber molded body tends to become excessively high upon heating owing to a large number of voids in the molded body, so that the inorganic fiber molded body tends to be undesirably lowered in mechanical strength. On the contrary, when the bulk density of the needle blanket is excessively large, the resulting inorganic fiber molded body tends to be remarkably deteriorated in cushioning property and toughness and become rigid and brittle, so that it may be difficult to mount the inorganic fiber molded body to skid pipes having a small diameter, etc., upon which it is required to deform the molded body.

### [Aggregate of inorganic fibers]

The needle blanket that is impregnated with the liquid material of the precursor of the spinel-based compound is explained below. The needle blanket used in the present invention is an aggregate of inorganic fibers which is subjected to needling treatment.

### [Inorganic fibers]

The inorganic fibers constituting the needle blanket are not particularly limited. Examples of the inorganic fibers used in the needle blanket include single-component fibers comprising, for example, silica, alumina/silica, zirconia, spinel, titania or the like, and composite fibers formed of these substances. Of these inorganic fibers, from the standpoints of a heat resistance, a fiber strength (toughness) and safety, alumina/silica-based fibers are preferred, and polycrystalline alumina/silica-based fibers are more preferred.

The composition ratio (mass ratio) of alumina/silica of the alumina/silica-based fibers is preferably in the range of 65 to 98/35 to 2 which corresponds to the composition called a mullite composition or a high-alumina composition, more preferably 70 to 95/30 to 5, and still more preferably 70 to 74/30 to 26.

The inorganic fibers constituting the needle blanket preferably comprise the above polycrystalline alumina/silica-based fibers having a mullite composition in an amount of not less than 80% by mass, more preferably not less than 90% by mass and most preferably 100% by mass (as a whole amount).

In addition, the inorganic fibers included in the needle blanket preferably comprise substantially no fibers having a fiber diameter of not more than 3 *µ*m. The expression "substantially no fibers having a fiber diameter of not more than 3 *µ*m" means that the content of the fibers having a fiber diameter of not more than 3 *µ*m in the inorganic fibers is not more than 0.1% by mass based on a total mass of the inorganic fibers.

The average fiber diameter of the inorganic fibers included in the needle blanket is optional, and usually 5 to 7 *µ*m. When the average fiber diameter of the inorganic fibers is excessively thick, the resulting needle blanket tends to be deteriorated in resilience and toughness. On the contrary, when the average fiber diameter of the inorganic fibers is excessively thin, the amount of fiber dusts floating in air tends to be increased so that there is a high probability that the resulting needle blanket comprises those inorganic fibers having a fiber diameter of not more than 3 *µ*m.

The needle blanket having the above suitable average fiber diameter which comprises substantially no fibers having a fiber diameter of not more than 3 *µ*m may be produced by the below-mentioned precursor fiberization method for producing an aggregate of inorganic fibers in which a viscosity of a spinning solution, an air flow used in a spinning nozzle, a drying condition of a drawn yarn, etc., are well controlled.

### [Needling density]

The needle blanket is obtained by subjecting an aggregate of an inorganic fiber precursor to needling treatment. The needling treatment is capable of not only forming a strong aggregate of inorganic fibers in which the constituting inorganic fibers are entangled with each other, but also well controlling a thickness of the aggregate of inorganic fibers. The needling density of the needle blanket may be appropriately selected and determined, and is usually 2 to 200 punches/cm², preferably 2 to 150 punches/cm², more preferably 2 to 100 punches/cm², and still more preferably 2 to 50 punches/cm². When the needling density of the needle blanket is excessively low, the resulting inorganic fiber molded body tends to be deteriorated in uniformity of a thickness thereof and thermal shock resistance. On the contrary, when the needling density of the needle blanket is excessively high, the inorganic fibers tend to be injured and readily suffer from shrinkage after firing.

### [Surface density and thickness of needle blanket]

The surface density of the needle blanket is not particularly limited and may be appropriately determined. The surface density of the needle blanket is usually 1000 to 4000 g/m², preferably 1500 to 3800 g/m² and more preferably 2000 to 3600 g/m². When the surface density of the needle blanket is excessively low, the content of the inorganic fibers in the resulting inorganic fiber molded body tends to be reduced, so that merely a thin molded body tends be produced and therefore deteriorated in performance as an insulating inorganic fiber molded body. On the contrary, when the surface density of the needle blanket is excessively high, the content of the inorganic fibers in the resulting inorganic fiber molded body tends to be excessively increased, so that it may be difficult to control a thickness of the inorganic fiber molded body by the needling treatment.

The thickness of the needle blanket is not particularly limited and may be appropriately determined according to the applications thereof, and is usually about 5 to about 50 mm, and the needle blanket has a mat-like shape. In addition, the bulk density of the needle blanket is optional, but is preferably large in order to form a dense inorganic fiber molded body after impregnating the needle blanket with the liquid material of the precursor of the spinel-based compound. The bulk density of the needle blanket is usually not less than 0.05 g/cm², preferably not less than 0.06 g/cm², and more preferably not less than 0.1 g/cm². The upper limit of the bulk density of the needle blanket is usually 0.25 g/cm². Meanwhile, the needle blanket may be in the form of a laminate formed by laminating a plurality of needle blanket sheets. In this case, a plurality of needle blanket sheets used may be different in surface density or thickness from each other, but there are preferably used those needle blanket sheets capable of satisfying the aforementioned needling density and surface density.

### [Method for producing needle blanket]

The method for producing the needle blanket is not particularly limited, and the needle blanket may be produced by any conventionally known optional methods. The needle blanket may be produced by the above precursor fiberization method including a step of forming an aggregate of an inorganic fiber precursor, subjecting the resulting aggregate of the inorganic fiber precursor to needling treatment, and firing the aggregate of the inorganic fiber precursor thus subjected to needling treatment to form an aggregate of inorganic fibers.

The method for producing the needle blanket will be described below by referring to an example of a process for producing an aggregate of alumina/silica-based fibers. However, the needle blanket according used in the present invention is not limited to the aggregate of alumina/silica-based fibers. As described above, the aggregate of inorganic fibers may be an aggregate of silica, zirconia, spinel, titania or composite fibers thereof.

### [Spinning step]

In order to produce the mat-like aggregate of alumina/silica-based fibers by the precursor fiberization method, fibers are spun from a spinning solution comprising basic aluminum chloride, a silicon compound, an organic polymer serving as a thickener, and water by a blowing method to obtain an aggregate of an alumina/silica fiber precursor.

### [Preparation of spinning solution]

Basic aluminum chloride: Al(OH)₃₋ₓClₓ may be prepared, for example, by dissolving metallic aluminum in hydrochloric acid or an aqueous aluminum chloride solution. In the chemical formula described above, the value of x is usually in the range of 0.45 to 0.54 and preferably 0.5 to 0.53. As the silicon compound, a silica sol is preferably used. Alternatively, tetraethyl silicate or a water-soluble silicon compound, such as a water-soluble siloxane derivative may also be used. As the organic polymer, for example, a water-soluble polymer compound, e.g., polyvinyl alcohol, polyethylene glycol or polyacrylamide, is preferably used. These organic polymers usually have a degree of polymerization of 1000 to 3000.

The ratio of aluminum derived from the basic aluminum chloride to silicon derived from the silicon compound in the spinning solution is usually 99:1 to 65:35 and preferably 99:1 to 70:30 in terms of a mass ratio of Al₂O₃ to SiO₂. The concentration of aluminum in the spinning solution is preferably in the range of 170 to 210 g/L, and the concentration of the organic polymer in the spinning solution is preferably in the range of 20 to 50 g/L.

In the case where the content of the silicon compound in the spinning solution is less than the above-specified range, alumina constituting short fibers tends to be easily converted into α-alumina, and the increase in size of alumina particles tends to cause brittleness of the short fibers. On the other hand, in the case where the content of the silicon compound in the spinning solution is more than the above-specified range, the content of silica (SiO₂) formed together with mullite (3Al₂O₃·2SiO₂) tends to be increased, so that the heat resistance of the resulting alumina/silica-based fibers tends to be reduced.

In any of the case where the concentration of aluminum in the spinning solution is less than 170 g/L and the case where the concentration of the organic polymer in the spinning solution is less than 20 g/L, the spinning solution tends to fail to have an appropriate viscosity, thus reducing a fiber diameter of the resulting alumina/silica-based fibers. That is, an excessively large amount of free water in the spinning solution results in a low drying rate during the spinning by the blowing method, leading to excessive drawing of fibers. As a result, the fiber diameter of the spun precursor fibers tends to be changed, failing to provide short fibers having a predetermined average fiber diameter and a sharp fiber diameter distribution. Furthermore, in the case where the aluminum concentration is less than 170 g/L, the productivity tends to be reduced.

On the other hand, in any of the case where the aluminum concentration exceeds 210 g/L and the case where the organic polymer concentration exceeds 50 g/L, the viscosity of the resulting solution tends to be too high to use such a solution as a spinning solution. The concentration of aluminum in the spinning solution is preferably in the range of 180 to 200 g/L. The concentration of the organic polymer in the spinning solution is preferably in the range of 30 to 40 g/L.

The spinning solution described above is prepared by adding the silicon compound and the organic polymer to an aqueous basic aluminum chloride solution in such amounts as to satisfy the above ratio of Al₂O₃ to SiO₂, and then concentrating the resulting mixture such that the aluminum concentration and the organic polymer concentration in the spinning solution fall within the above-specified ranges.

### [Spinning]

Spinning (formation of fibers from the spinning solution) is usually performed by a blowing method in which the spinning solution is fed into a high-speed spinning gas flow, thereby producing an alumina/silica-based fiber precursor. The structure of a spinning nozzle used in the above spinning procedure is not particularly limited. For example, preferred is such a structure as described in Japanese Patent No. 2602460 in which an airflow blown from an air nozzle and a flow of a spinning solution emerging from a spinning solution supply nozzle are parallel to each other, and the parallel flow of air is sufficiently rectified and comes into contact with the spinning solution.

Upon the spinning, fibers sufficiently drawn are formed from the spinning solution under the conditions in which the evaporation of water and the decomposition of the spinning solution are prevented, and then the resulting fibers are preferably rapidly dried. To this end, the atmosphere is preferably changed from a state in which the evaporation of water is suppressed to a state in which the evaporation of water is promoted, in the course of from the formation of fibers from the spinning solution to the arrival of the fibers at a fiber collector.

The aggregate of the alumina/silica-based fiber precursor may be recovered in the form of a continuous sheet (thin-layer sheet) within an accumulating device having a structure in which a wire-mesh endless belt is arranged so as to be substantially perpendicular to the spinning airflow and in which the spinning airflow comprising the alumina/silica-based fiber precursor impinges on the belt while the endless belt is rotated. The thin-layer sheets may be overlapped and laminated on each other to obtain an aggregate of the alumina/silica-based fiber precursor.

### <Needling treatment step>

The aggregate of the alumina/silica-based fiber precursor produced by the spinning is then subjected to needling treatment. In the present invention, the needling treatment is preferably performed under the conditions in which the above needling density is satisfied.

### [Firing step]

The firing after the needling treatment is usually performed at a temperature of 900°C or higher and preferably 1000 to 1300°C. The firing temperature lower than 900°C tends to cause insufficient crystallization, thus providing only brittle alumina/silica-based fibers having a low strength. The firing temperature exceeding 1300°C tends to promote grain growth of crystals of the fibers, thereby providing only brittle alumina/silica-based fibers having a low strength.

### [Inorganic fiber molded body]

Next, an example of the procedure for producing the inorganic fiber molded body according to the present invention which is produced by impregnating the needle blanket obtained by the above method with a liquid material of a precursor of a spinel-based compound; drying the thus impregnated needle blanket; and firing the dried needle blanket to convert the precursor into an oxide thereof, is explained below.

### [Liquid material of precursor of spinel-based compound]

The liquid material of a precursor of a spinel-based compound used in the present invention comprises a precursor of a spinel-based compound represented by the general formula: MgₓAl_{y}O₄ wherein an atomic ratio (y/x) is from 6 to 10. Such a precursor can be readily produced, for example, by using a sol of each of alumina and magnesia. The particle diameter of the oxide as the raw material is usually not more than 1 *µ*m.

In addition, an aluminum compound and a magnesium compound may also be respectively used in place of aluminum and magnesia. Examples of the aluminum compound include hydrous alumina-based compounds such as alumina hydroxide and boehmite, and aluminum salts such as aluminum chloride, aluminum acetate, aluminum lactate and aluminum nitrate. Examples of the magnesium compound include magnesium salts such as magnesium chloride, magnesium nitrate, magnesium acetate, magnesium hydroxide and magnesium carbonate. The aluminum compound and the magnesium compound may be used in the form of a sol, a slurry or a solution. Examples of a dispersant or a solvent used for preparing the sol, slurry or solution include water, organic solvents such as alcohols and mixtures thereof. The dispersant or solvent may also comprise a polymer component such as polyvinyl alcohol. In addition, in order to enhance a stability of the compound in the sol, slurry or solution, a dispersion stabilizer may be added thereto. Examples of the dispersion stabilizer include acetic acid, lactic acid, hydrochloric acid and nitric acid.

The above general formula may also be expressed by MgOₓAl_{y}O₃ wherein an atomic ratio (y/x) is from 6 to 10 . In the case where a non-oxide such as the above aluminum compound and magnesium compound is used, the amount of the aluminum compound and magnesium compound used may be determined in terms of an oxide thereof.

It is important that the ratio y/x (atomic ratio) in the above general formula is from 6 to 10 . The upper limit of the ratio y/x (atomic ratio) is generally 40. In the present invention, the ratio y/x (atomic ratio) is 6 to 10, and more preferably 6 to 8. When the alumina content is excessively high, the resulting inorganic fiber molded body tends to be deteriorated in scale resistance. On the contrary, when the magnesia content is excessively high, the resulting inorganic fiber molded body tends to be insufficient in effect of reducing a shrinkage factor thereof.

The solid content of the liquid material of the precursor of the spinel-based compound is usually 3 to 15% by mass, and preferably 5 to 12% by mass. When the solid content of the liquid material is excessively low, it is not possible to impregnate a desired amount of the liquid material into the needle blanket, so that the resulting inorganic fiber molded body might occasionally fail to exhibit a thickness, a hardness, a mechanical strength and a scale resistance as desired. On the contrary, when the solid content of the liquid material is excessively high, it might be difficult to impregnate the liquid material into the needle blanket, so that the workability for the impregnation tends to be deteriorated, and the resulting inorganic fiber molded body tends to be deteriorated in various properties such as heat-insulting property and shock resistance.

### [Impregnation]

The method of impregnating the needle blanket with the liquid material of the precursor is not particularly limited, and the impregnation may be carried out by any conventionally known optional methods. More specifically, there may be used, for example, the method in which the needle blanket is placed in a mold, etc., and immersed in the liquid material of the precursor, followed by lifting the needle blanket from the liquid material of the precursor, or the like. The impregnation step may be repeated plural times. After completion of the impregnation step, the thus impregnated needle blanket may be subjected to suction forming such as vacuum evacuation molding or press- or compression-molding to remove a surplus of the liquid material of the precursor therefrom, and then transferred to the drying step.

The amount of the liquid material of the precursor impregnated into the needle blanket may be appropriately determined according to a bulk density, a thickness, a hardness, a mechanical strength and thermal properties of the aimed inorganic fiber molded body as well as production costs. The amount of the liquid material of the precursor impregnated into the needle blanket is usually 10 to 100 parts by mass and preferably 10 to 50 parts by mass in terms of parts by mass of the precursor of the spinel-based compound based on 100 parts by mass of the inorganic fibers in the needle blanket.

When the amount of the liquid material of the precursor impregnated into the needle blanket is excessively small, the resulting inorganic fiber molded body tends to fail to have a thickness, a hardness, a mechanical strength and a scale resistance, etc., as desired. On the contrary, when the amount of the liquid material of the precursor impregnated into the needle blanket is excessively large, the resulting inorganic fiber molded body tends to have an excessively high shrinkage factor upon heating, resulting in increase in production costs.

### <Drying>

The needle blanket impregnated with the liquid material of the precursor of the spinel-based compound is dried by heating the needle blanket at a temperature of usually 80 to 150°C. When the drying temperature is excessively low, the needle blanket tends to be hardly dried to a sufficient extent. On the contrary, when the drying temperature is excessively high, solid components tend to be migrated and concentrated in the vicinity of a surface layer portion of the needle blanket impregnated with the liquid material of the precursor of the spinel-based compound, so that the resulting inorganic fiber molded body tends to occasionally suffer from unevenness of a scale resistance in the thickness direction thereof. In addition, the drying may be conducted by directly transferring the undried needle blanket obtained after the impregnation step to the firing step.

As described above, the needle blanket obtained after carrying the precursor of the spinel-based compound thereon and then drying but before firing, has a bulk density of more than 0.20 g/cm³ and not more than 0.45 g/cm³. The thickness of the inorganic fiber molded body may also be appropriately determined according to the applications thereof, and is usually about 5 to about 50 mm.

### <Firing>

In the present invention, the needle blanket that carries the precursor of the spinel-based compound thereon is fired to convert the precursor into an oxide thereof. By conducting the firing step, in the case where the precursor is represented by the general formula: MgₓAl_{y}O₄ wherein an atomic ratio (y/x) is 6 to 10, a spinel (MgO·Al₂O₃) as a composite oxide is produced, whereas in the case where the precursor is represented by the above general formula wherein an atomic ratio (y/x) is 6 to 10, an oxide having a large content of alumina is produced. The oxide may be in the form of either a stoichiometric compound or a non-stoichiometric compound. Meanwhile, the firing conditions for converting the precursor of the spinel-based compound to an oxide thereof may be appropriately selected from any firing conditions conventionally known as methods for production of spinel.

### [Heat-insulating material]

The heat-insulating material according to the present invention is formed of the above inorganic fiber molded body. That is, the inorganic fiber molded body according to the present invention which is formed of the inorganic material is excellent not only in refractory heat-insulating property but also in scale resistance, thermal shock resistance and mechanical shock resistance, and therefore can be suitably used as a refractory heat-insulating material for high-temperature industrial furnaces such as a burner tile and a skid post.

### EXAMPLES

The present invention is described in more detail below by referring to the following Examples and Comparative Examples. However, these Examples are only illustrative and not intended to limit the present invention thereto, and any changes or modifications thereof are also possible unless they depart from the scope of the present invention.

Meanwhile, the methods for measuring and evaluating various properties or characteristics of the inorganic fiber molded bodies obtained in the following Examples, etc., are as follows.

### [Bulk density]

The mass of the specimen was measured by a balance, whereas a length, a width and a thickness of the specimen were measured by calipers to calculate a volume thereof. The bulk density of the specimen was calculated by dividing the mass by the volume.

### [Falling ball impact strength]

The aggregate of fibers obtained after carrying the precursor of the spinel-based compound thereon and then drying but before firing was processed and cut into a test piece with an area of 150 mm x 150 mm. A steel ball having a mass of 550 g was dropped from a height of 1 m on a central portion of the test piece to observe an appearance (breakage) thereof.

### [Spalling resistance]

The aggregate of fibers obtained after carrying the precursor of the spinel-based compound thereon and then drying but before firing was heated in a heating furnace at 1500°C, taken out from the furnace and quenched on an aluminum plate allowed to stand at room temperature (25°C) to visually observe the change in appearance thereof.

### [Heat shrinkage factor]

The aggregate of fibers obtained after carrying the precursor of the spinel-based compound thereon and then drying but before firing was processed and cut into a test piece with an area of 150 mm x 150 mm. The heat shrinkage factor in a plane direction of the test piece was measured as follows. That is, total nine platinum pins were uprightly fixed on the plane of the test piece such that three pins were disposed 5 mm inside from each end of the test piece and one pin was disposed at a center of the plane of the test piece, and the distance between an optional one of the pins as a reference pin and each of the other pins was measured by a microscope with a vernier. The heat shrinkage factor in a thickness direction of the test piece was measured at 8 positions thereof using calipers. Thereafter, the test piece was placed in an electric furnace, heated to 1500°C over 5 hr and then held at that temperature for 8 hr. Then, after cooling, the test piece was taken out from the electric furnace to measure the shrinkage in each of the plane and thickness directions of the test piece by the same method as described above, thereby determining a heat shrinkage factor of the test piece.

### [Scaling resistance]

An iron pellet having a thickness of 1 mm and a size of 5 mm square was rested on a surface of the aggregate of fibers obtained after carrying the precursor of the spinel-based compound thereon and then drying but before firing, and the aggregate of fibers with the iron pellet was placed in an electric furnace, heated to 1500°C over 5 hr and then held at that temperature for 3 hr. Then, after cooling, the aggregate of fibers was taken out from the electric furnace to visually observe the change in appearance thereof. The degree of iron oxide erosion was examined based on "depth", and evaluated according to ten ratings in which Rank 10 represents the condition that no erosion occurred and Rank 1 represents the condition that complete penetration occurred in the thickness direction.

### Examples 1 to 9:

Examples 1-3, 8 and 9 are reference examples, whereas examples 4-7 are examples of the invention. An aqueous basic aluminum chloride solution having an aluminum concentration of 170 g/L and a ratio Al/Cl (atomic ratio) of 1.8 was prepared. The aluminum concentration was quantitatively determined by a chelate titration method using EDTA. After a silica sol and polyvinyl alcohol were added to the aqueous solution, the resulting mixture was concentrated to prepare a spinning solution having a ratio of aluminum to silicon (weight ratio of Al₂O₃ to SiO₂) of 72:28, a total mass content of alumina and silica of about 30% by mass in terms of a total mass of oxides thereof, a viscosity of 40 poise (as measured at 25°C using a rotary viscometer). Fibers were spun from the spinning solution by a blowing method. The resulting fibers were collected to form a mat-like fiber aggregate of an alumina/silica-based fiber precursor. The mat-like fiber aggregate was subjected to needling treatment and then fired at 1200°C to obtain an aggregate of polycrystalline alumina/silica-based fibers having a width of 600 mm and a thickness and properties (surface density and bulk density) as shown in Table 1 (hereinafter also referred to as a "raw fabric"). Meanwhile, the needling treatment was performed at a needling density of not less than 3 punches/cm² using a needle punching machine.

Meanwhile, the composition of the polycrystalline alumina/silica-based fibers was a mullite composition having a ratio of alumina to silica of 72/28 (mass ratio). As a result of measuring diameters of the fibers by observing the resulting fiber aggregate by a microscope, the polycrystalline alumina/silica-based fibers had an average fiber diameter of 5.5 *µ*m (as an average value of 100 fibers) and a minimum fiber diameter of 3.5 *µ*m.

The raw fabric was processed and cut into fabric sheets each approximately having a size of 300 mm x 300 mm. The aggregate of inorganic fibers obtained by using a predetermined number of the fabric sheets as shown in Table 1 was impregnated with a sol of a precursor (alumina and magnesia) of a spinel-based compound having a solid content as shown in Table 1. Then, four spacers each having a predetermined thickness were respectively disposed on four sides of the aggregate of inorganic fibers, and the aggregate of inorganic fibers was compressed until reaching the thickness of the spacers and kept in a compressed state by a clamp. Next, using a swirl blower, a suction force of 3.0 m³/min was applied to a bottom surface of the raw fabric, and a dried air having a temperature of 125°C was contacted with an upper surface of the raw fabric (surface thereof opposed to the bottom surface), thereby obtaining board-shaped inorganic fiber molded bodies each having a thickness and a bulk density as shown in Table 1. Thereafter, the resulting board-shaped inorganic fiber molded bodies were placed in an electric furnace, heated to 1500°C over 5 hr and then held at that temperature for 3 hr to convert the precursor of the spinel-based compound into an oxide thereof.

The amounts of the precursor (alumina and magnesia) of the spinel-based compound impregnated into the respective board-shaped inorganic fiber molded bodies based on 100 parts by mass of the alumina/silica-based fibers are shown in Table 1.

Meanwhile, the sol of the precursor of the spinel-based compound was a sol prepared by dispersing an alumina sol (tradename: "Alumina Sol-200" produced by Nissan Chemical Industries, Ltd.) and a powder of magnesium acetate in water while controlling a mass ratio therebetween. The mass ratios of alumina and magnesia constituting the sol (mass ratio between the oxides) are shown in Table 1. The results of evaluation of the board-shaped inorganic fiber molded bodies are shown in Table 2.

### Comparative Example 1:

As the inorganic fibers, there were used those fibers prepared by fibrillating the alumina/silica-based fibers having a composition ratio of alumina/silica of 72/28 (mass ratio) obtained by the same method as in Example 1 into a fiber length of about 200 *µ*m using a dry fibrillation machine. Two hundred grams of the thus fibrillated alumina/silica-based fibers, 30 g of an alumina powder, 50 g of a mullite powder, 20 g of starches, 10 g of a silica sol and 20 g of a coagulant were mixed in 10 L of water using a pulper, and the resulting mixture was subjected to dehydration molding, thereby obtaining a board-shaped molded body having a thickness and a bulk density as shown in Table 1.

The average fiber diameter and the minimum fiber diameter of the alumina/silica-based fibers included in the board-shaped molded body are shown in Table 1. The results of evaluation of the thus obtained board-shaped molded body are shown in Table 2.

### Comparative Examples 2 to 4:

The mat-like fiber aggregate obtained by using the alumina/silica-based fiber precursor having a mass ratio of alumina/silica of 72/28, i.e., a mullite composition which was produced in the same manner as in Examples as the inorganic fibers, was subjected to needle punching, thereby obtaining an aggregate of inorganic fibers having a bulk density of less than 0.10 g/cm³ as shown in Table 1.

As the inorganic sol, there was used such a sol as prepared by dispersing an alumina sol ("Alumina Sol-200" produced by Nissan Chemical Industries, Ltd.) and a powder of magnesium acetate in water while controlling a composition ratio between the oxides as shown in Table 1, thereby obtaining board-shaped inorganic fiber molded bodies each having a thickness and a bulk density as shown in Table 2.

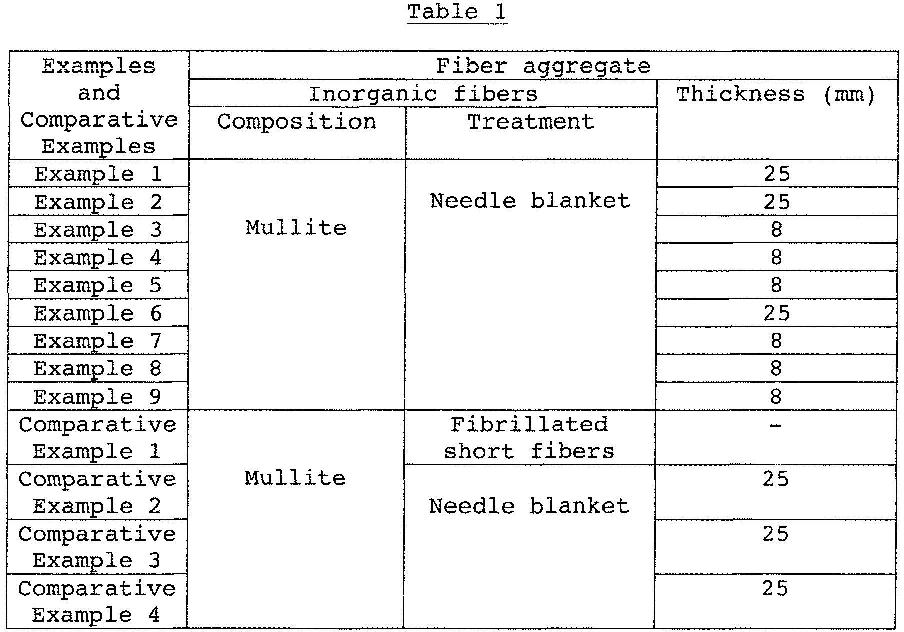

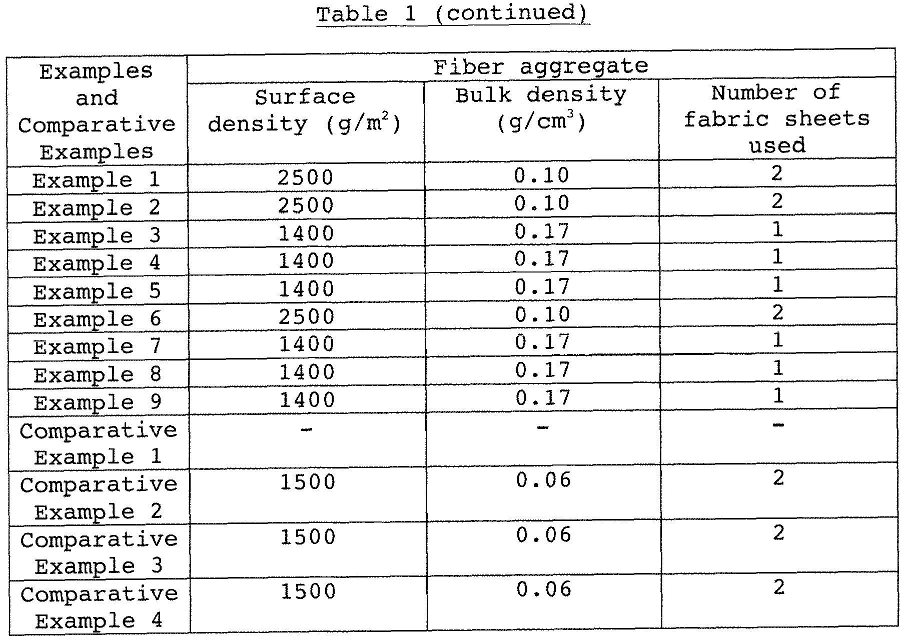

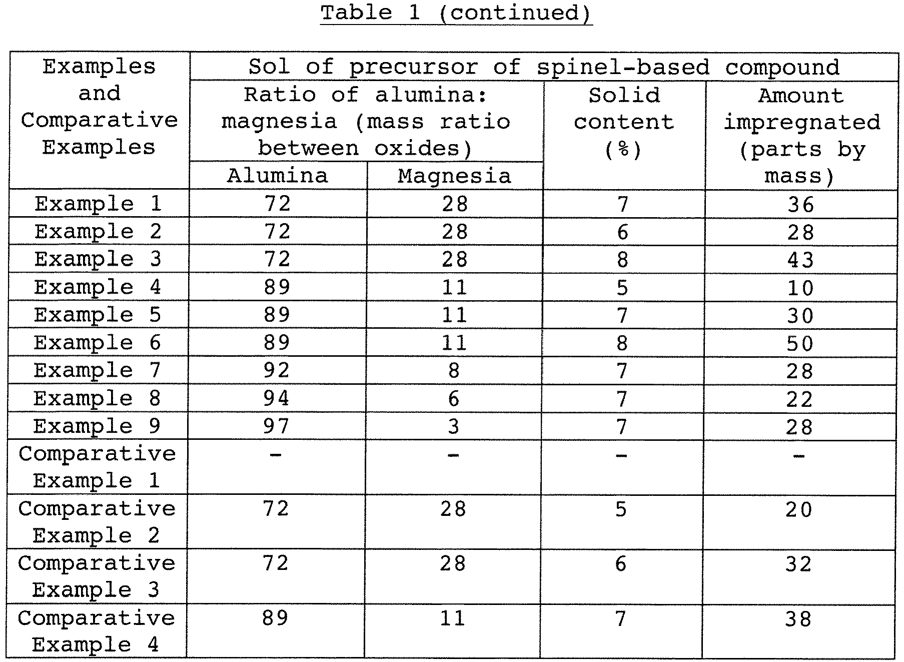

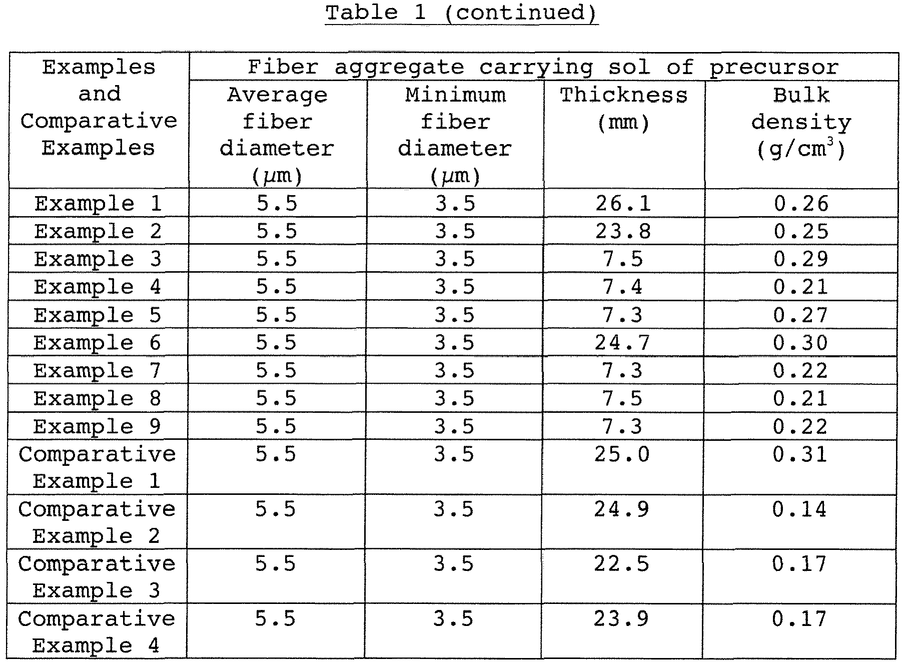

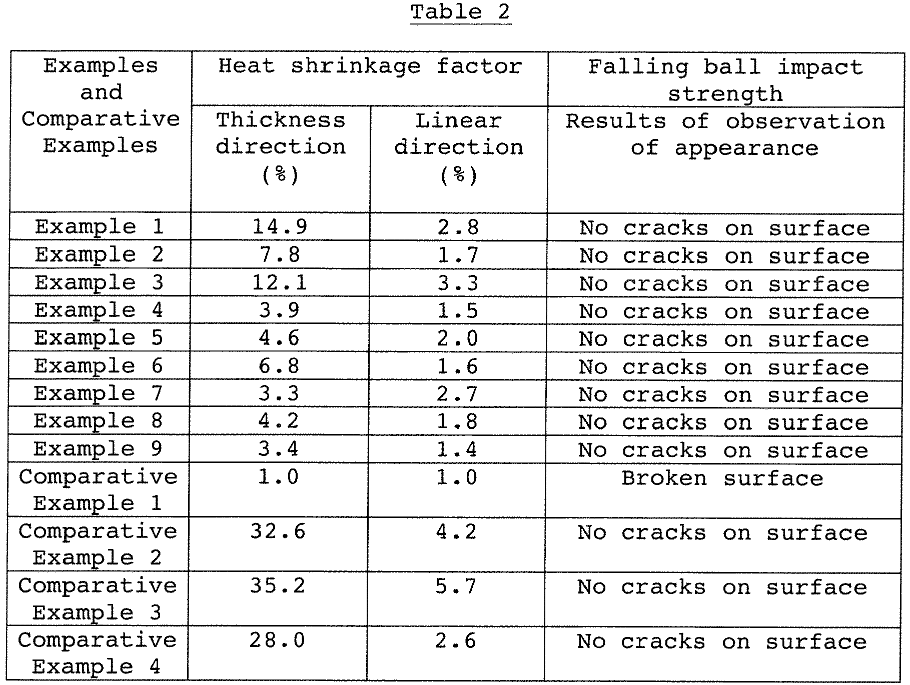

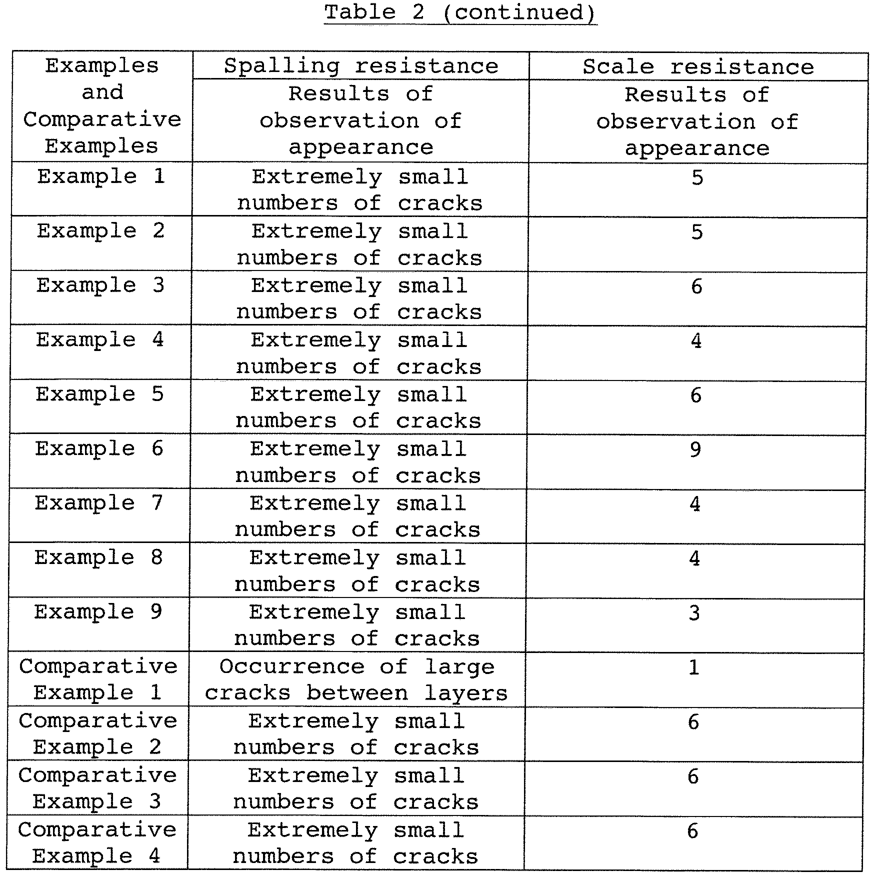

From the results shown in Tables 1 and 2, it was apparently confirmed that the inorganic fiber molded body of the present invention has a good scale resistance and is excellent in thermal shock resistance and mechanical shock resistance, suffers from no cracks or extremely less cracks on a surface thereof, and exhibits a low shrinkage factor upon high-temperature heating, thereby providing an excellent inorganic fiber molded body.

## Claims

1. An inorganic fiber molded body produced by impregnating a needle blanket of inorganic fibers with a liquid material that comprises a precursor of a spinel-based compound, the precursor being represented by the general formula:
MgₓAl_{y}O₄
wherein an atomic ratio (y/x) is from 6 to 10;
drying the thus impregnated needle blanket; and firing the dried needle blanket to convert the precursor into an oxide thereof,
wherein the needle blanket obtained after carrying the precursor of the spinel-based compound thereon and then drying but before firing has a bulk density of more than 0.20 g/cm³ and not more than 0.45 g/cm³.

2. The inorganic fiber molded body according to claim 1, wherein the atomic ratio (y/x) in the general formula is from 6 to 8.

3. The inorganic fiber molded body according to any one of claims 1 or 2, wherein the needle blanket of inorganic fibers have a bulk density of not less than 0.10 g/cm³.

4. The inorganic fiber molded body according to any one of claims 1 to 3, wherein the inorganic fibers have an average fiber diameter of 5 to 7 µm and comprise substantially no fibers having a fiber diameter of not more than 3 µm.

5. The inorganic fiber molded body according to any one of claims 1 to 4, wherein the needle blanket of inorganic fibers has a needling density of 2 to 200 punches per 1 cm² of an optional needling treatment surface of the needle blanket.

6. The inorganic fiber molded body according to any one of claims 1 to 5, wherein the inorganic fibers are polycrystalline alumina/silica-based fibers comprising 65 to 98% by mass of alumina and 2 to 35% by mass of silica.

7. The inorganic fiber molded body according to any one of claims 1 to 6, wherein an amount of the liquid material of the precursor impregnated into the needle blanket is 10 to 100 parts by mass in terms of parts by mass of the precursor of the spinel-based compound based on 100 parts by mass of the inorganic fibers in the needle blanket.

8. The inorganic fiber molded body according to any one of claims 1 to 7, wherein the needle blanket has a surface density of 1000 to 4000 g/m².

9. A heat-insulating material comprising the inorganic fiber molded body as defined in any one of claims 1 to 8.

10. The heat-insulating material according to claim 9, which is in the form of a burner tile.

11. A skid pipe having a heat-insulating material according to claim 9 fitted thereto.

12. Use of the inorganic fiber molded body according to any one of claims 1 to 8 as a refractory heat-insulating material for a burner tile or a skid post.

## Patentansprüche

1. Formkörper aus anorganischer Faser, erzeugt durch Imprägnieren einer Nadeldecke aus anorganischen Fasern mit einem flüssigen Material, das einen Vorläufer aus einer Verbindung auf Spinellbasis enthält, wobei der Vorläufer durch die allgemeine Formel dargestellt ist:
MgₓAl_{y}O₄
worin das Atomverhältnis (y/x) von 6 bis 10 ist;
Trocknen der somit imprägnieren Nadeldecke; und Brennen der getrockneten Nadeldecke, zum Umwandeln des Vorläufers in ein Oxid davon,
worin die Nadeldecke, erhalten nach Tragen des Vorläufers aus der Verbindung auf Spinellbasis darauf und anschließendem Trocknen, aber vor dem Brennen, eine Schüttdichte von mehr als 0,20 g/cm³ und nicht mehr als 0,45 g/cm³ hat.

2. Formkörper aus anorganischer Faser gemäß Anspruch 1, worin das Atomverhältnis (y/x) in der allgemeinen Formel von 6 bis 8 ist.

3. Formkörper aus anorganischer Faser gemäß einem der Ansprüche 1 oder 2, worin die Nadeldecke aus anorganischen Fasern eine Schüttdichte von nicht weniger als 0,10 g/cm³ hat.

4. Formkörper aus anorganischer Faser gemäß einem der Ansprüche 1 bis 3, worin die anorganischen Fasern einen durchschnittlichen Faserdurchmesser von 5 bis 7 *µ*m haben und im Wesentlichen keine Faser mit einem Faserdurchmesser von nicht mehr als 3 *µ*m enthalten.

5. Formkörper aus anorganischer Faser gemäß einem der Ansprüche 1 bis 4, worin die Nadeldecke aus anorganischen Fasern eine Nadeldichte von 2 bis 200 Stiche pro 1 cm² einer wahlweisen Nadelungsbehandlungsoberfläche der Nadeldecke hat.

6. Formkörper aus anorganischer Faser gemäß einem der Ansprüche 1 bis 5, worin die anorganischen Fasern polykristalline Fasern auf Aluminiumoxid-/Siliciumoxidbasis mit 65 bis 98 Masse-% Aluminiumoxid und 2 bis 35 Masse-% Silika sind.

7. Formkörper aus anorganischer Faser gemäß einem der Ansprüche 1 bis 6, worin eine Menge des Flüssigmaterials des Vorläufers, der in die Nadeldecke imprägniert ist, 10 bis 100 Massenteile in Bezug auf die Massenteile des Vorläufers der Verbindung auf Spinellbasis ist, bezogen auf 100 Massenteile der anorganischen Fasern in der Nadeldecke.

8. Formkörper aus anorganischer Faser gemäß einem der Ansprüche 1 bis 7, worin die Nadeldecke eine Oberflächendichte von 1.000 bis 4.000 g/m² hat.

9. Wärmeisolationsmaterial, enthaltend den Formkörper aus anorganischer Faser wie in einem der Ansprüche 1 bis 8 definiert.

10. Wärmeisolationsmaterial gemäß Anspruch 9, das in der Form eines Brennersteins vorliegt.

11. Gleitrohr mit einem Wärmeisolationsmaterial gemäß Anspruch 9, das daran angepasst ist.

12. Verwendung des Formkörpers aus anorganischer Faser gemäß einem der Ansprüche 1 bis 8, als feuerfestes Wärmeisolationsmaterial für einen Brennerstein oder ein Gleitrohr.

## Revendications

1. Corps moulé en fibres inorganiques produit en imprégnant une nappe aiguilletée de fibres inorganiques avec un matériau liquide qui comprend un précurseur d'un composé à base de spinelle, le précurseur étant représenté par la formule générale :
MgₓAl_{y}O₄
où un rapport atomique (y/x) est compris entre 6 et 10 ;
en séchant la nappe aiguilletée ainsi imprégnée; et en cuisant la nappe aiguilletée séchée pour convertir le précurseur en un oxyde de celui-ci,
dans lequel la nappe aiguilletée obtenue après application du précurseur du composé à base de spinelle sur celui-ci et ensuite séchage, mais avant cuisson, a une masse volumique supérieure à 0,20 g/cm³ et inférieure à 0,45 g/cm³.

2. Corps moulé en fibres inorganiques selon la revendication 1, dans lequel le rapport atomique (y/x) dans la formule générale est compris entre 6 et 8.

3. Corps moulé en fibres inorganiques selon l'une quelconque des revendications 1 ou 2, dans lequel la nappe aiguilletée de fibres inorganiques a une masse volumique qui n'est pas inférieure à 0,10 g/cm³.

4. Corps moulé en fibres inorganiques selon l'une quelconque des revendications 1 à 3, dans lequel les fibres inorganiques ont un diamètre de fibre moyen de 5 à 7 µm et ne comprennent sensiblement pas de fibres ayant un diamètre de fibre inférieur à 3 µm.

5. Corps moulé en fibres inorganiques selon l'une quelconque des revendications 1 à 4, dans lequel la nappe aiguilletée de fibres inorganiques a une densité d'aiguilletage de 2 à 200 perforations pour 1 cm² d'une surface de traitement d'aiguilletage facultative de la nappe aiguilletée.

6. Corps moulé en fibres inorganiques selon l'une quelconque des revendications 1 à 5, dans lequel les fibres inorganiques sont des fibres polycristallines à base d'alumine/silice comprenant de 65 à 98 % en masse d'alumine et de 2 à 35 % en masse de silice.

7. Corps moulé en fibres inorganiques selon l'une quelconque des revendications 1 à 6, dans lequel une quantité du matériau liquide du précurseur imprégné dans la nappe aiguilletée est de 10 à 100 parties en masse en termes de parties en masse du précurseur du composé à base de spinelle sur la base de 100 parties en masse des fibres inorganiques dans la nappe aiguilletée.

8. Corps moulé en fibres inorganiques selon l'une quelconque des revendications 1 à 7, dans lequel la nappe aiguilletée a une densité surfacique de 1 000 à 4 000 g/m².

9. Matériau isolant thermique comprenant le corps moulé en fibres inorganiques selon l'une quelconque des revendications 1 à 8.

10. Matériau isolant thermique selon la revendication 9, qui se présente sous la forme d'une brique de brûleur.

11. Tube de glissière ayant un matériau isolant thermique selon la revendication 9 ajusté à celui-ci.

12. Utilisation du corps moulé en fibres inorganiques selon l'une quelconque des revendications 1 à 8 en tant que matériau isolant thermique réfractaire pour une brique de brûleur ou un montant de glissière.
